# EUROPÄISCHE PATENTSCHRIFT

(11) **EP 1 917 153 B1**
(45) Veröffentlichungstag und Bekanntmachung des Hinweises auf die Patenterteilung: **23.01.2013**
(21) Anmeldenummer: 06792579.2
(22) Anmeldetag: 26.07.2006
(51) Int. Cl.: B60K 26/02, G05G 1/487, F16H 59/20

(54) **KICK-DOWN-EINRICHTUNG EINES FAHRPEDALMODULS**
KICK-DOWN DEVICE OF AN ACCELERATOR PEDAL MODULE
DISPOSITIF DE RETROGRADAGE FORCE D'UN MODULE D'ACCELERATEUR

(30) Priorität: 17.08.2005 DE 102005038750
(43) Veröffentlichungstag der Anmeldung: 07.05.2008
(73) Patentinhaber: ROBERT BOSCH GMBH, 70442 Stuttgart (DE)
(72) Erfinder: BAUER, Bernhard, 71554 Weissach (DE); LINKE, Thomas, 71336 Waiblingen (DE); OTTO, Werner, 99837 Dankmarshausen (DE); MARWEDE, Juergen, 99817 Eisenach (DE); JUNG, Karl-Heinz, 99867 Gotha (DE); DIAZ, Jorge, 70734 Fellbach (DE); BAUR, Axel, 71032 Boeblingen (DE)
(86) Internationale Anmeldenummer: PCT/EP2006/064695
(87) Internationale Veröffentlichungsnummer: WO 2007/020163

(56) Entgegenhaltungen:
- EP-B1- 1 129 884
- WO-A-00/64696
- DE-U1- 7 927 176
- US-A1- 2005 097 980
- US-B1- 6 394 431

## Beschreibung

### Stand der Technik

Die Erfindung geht aus von einer Kick-Down-Einrichtung eines Fahrpedalmoduls eines Kraftfahrzeugs, welches ein an einem Lagerbock gelagertes, zwischen einer Ruhestellung und einer Endstellung verstellbares Fahrpedal beinhaltet, gemäß dem Oberbegriff von Anspruch 1.

Kick-Down-Einrichtungen oder Fluchtschalter in Fahrzeugen mit Automatikgetriebe oder in Fahrzeugen mit Fluchtschaltfunktion geben dem Fahrer durch sprunghaften Betätiglingskraftanstieg eine fühlbare Rückmeldung darüber, dass eine Kick-Down- oder Fluchtschalterfunktion ausgelöst wurde.

Eine gattungsgemäße Kick-Down-Einrichtung gemäβ dem Oberbegriff des Anspruchs 1 und des Anspruchs 3 ist beispielsweise aus der WO 00/64696 bekannt. Dort spannt eine Spreizfeder zwei in einem Betätigungsglied radial geführte Kugeln quer zur axialen Betätigungsrichtung des Betätigungsglieds nach radial außen. Durch axiale Betätigung des Betätigungsglieds gegen die Wirkung einer Rückstellfeder kontaktieren die Kugeln einen zu überdrückenden elastischen Metallbügel. Der Aufbau dieser Kick-Down-Einrichtung ist allerdings wegen der Vielzahl von Bauelementen, insbesondere wegen der drei Federelemente relativ komplex und deshalb kostenintensiv.

Gemäß der EP 1 129 884 B1 beinhaltet eine Kick-Down-Einrichtung ein gegen die Kraft einer Rückstellfeder axial verschiebliches Betätigungsglied, das zwei diametral angeordnete Wälzkörper trägt, die beim Einschieben des Betätigungsglieds in ein Gehäuse der Kick-Down-Einrichtung zum Zwecke der Erhöhung der Verschiebekraft gegen die Kraft einer U-förmigen Blattfeder über jeweils eine Überdrückungskante überdrückt werden. Auch diese Kick-Down-Einrichtung ist wegen der Vielzahl von Bauteilen relativ komplex aufgebaut.

Bei einer Kick-Down-Einrichtung gemäß der DE 195 21 821 C1 wird der Kraftsprung durch einen am Fahrpedal angeordneten Nocken erzeugt, welcher in den Zwischenraum zwischen zwei Rollen gedrückt diese gegen Schenkel einer Blattfeder radial nach außen drängt. Die Rückstellung der Kick-Down-Einrichtung erfolgt durch eine Rückstellfeder des Fahrpedals. Eine solche Lösung erfordert sehr geringe Toleranzen zwischen Lagerbock und Fahrpedal, weil für eine zuverlässige Funktion die Relativlage des Nockens zu den Rollen entscheidend ist. Dies bedingt jedoch relativ hohe Fertigungs- und Montagekosten. Da die Kick-Down-Einrichtung nicht über eine eigene Rückstellfeder verfügt, besteht die Gefahr, dass bei einem Verklemmen des Nockens zwischen den Rollen das Fahrpedal nicht mehr rückgestellt werden kann und in Volllaststellung verbleibt. Weiterhin wird die Rückstellung von einem deutlich hörbaren Geräusch begleitet, wenn die Blattfeder zurückfedert und die Rollen in ihrer Ausgangsposition anschlagen. Nicht zuletzt ist die Dauerhaltbarkeit der Blattfeder in der beschriebenen Anordnung nicht allzu hoch.

Die Offenlegungsschrift US 2005/0097980 A1 zeigt eine Kick-Down-Einrichtung mit einem gefederten, in einem Gehäuse verschiebbaren Element mit geneigten Tragflächen und mit an den Tragflächen sich abstützenden Anschlagelementen. Bei der bekannten Kick-Down-Einrichtung ist für das Gehäuse eine zerklüftete Formgebung mit einer Vielzahl von Kanten und Vor- bzw. Rücksprüngen erforderlich, was einen hohen Herstellaufwand erforderlich macht.

### Vorteile der Erfindung

Bei der Kick-Down-Einrichtung leitet das Keilglied mit seiner Keilfläche die Federkraft der Feder radial auf den Wälzkörper um, wodurch die Vorspannung zur Erhöhung der Betätigungskraft sowie die Rückstellkraft zum Rückstellen der Kick-Down-Einrichtung bereitgestellt wird.

Bei der Kick-Down-Einrichtung sorgt eine Feder einerseits im Zusammenwirken mit der Keilfläche des Keilglieds für die Änderung der Betätigungskraft und andererseits für das Rückstellen der Kick-Down-Einrichtung durch axiales Zurückdrängen des Keilglieds sowie durch radiales Zurückdrängen des Wälzkörpers in die Querausnehmung. Die geforderte Kraftspitze, die der Fahrer bei Betätigung der Kick-Down-Einrichtung am Fahrpedal fühlen soll, wird dabei durch die Kraft gebildet, welche für das Herausdrücken des Wälzkörpers aus der Querausnehmung notwendig ist. Die Größe dieser Kraftspitze kann durch die Eindringtiefe des Wälzkörpers in der Querausnehmung bzw. durch die Geometrie von Wälzkörper und Querausnehmung und/oder durch die Federrate bestimmt werden. Danach fällt die Betätigungskraft rasch ab, da die am Fahrpedal fühlbare Gegenkraft der Kick-Down-Einrichtung neben der zu überwindenden Reibung im wesentlichen nur noch von der gespannten Feder erzeugt wird. Diese Feder kann bedingt durch den Kraftfluss über die Keilfläche relativ klein und weich ausgeführt werden. Dadurch ist der Kraftabfall der Kraft-Weg-Kennlinie nach der Kraftspitze relativ hoch, was den Geräuschkomfort erheblich steigert und eine eindeutige Rückmeldung an den Fahrer gewährleistet. Dies wird durch die Entkopplung des Wälzkörpers von der Feder mittels des Keilglieds unterstützt.

Eine Anpassung der Kraftspitze an verschiedene Fahrpedallängen kann durch eine Variation der Tiefe der Ausnehmung im Fahrpedal oder im Lagerbock erfolgen. Damit muss lediglich das Fahrpedal oder der Lagerbock, nicht aber die restlichen Bauteile angepasst werden, welche folglich Gleichteile darstellen. Insgesamt besteht die Kick-Down-Einrichtung aus lediglich vier Bauteilen, nämlich dem Betätigungsglied, dem Keilglied, der Feder und dem Wälzkörper. Insbesondere sind wegen der Aufnahme der genannten Bauteile in einer Ausnehmung des Fahrpedals oder des Lagerbocks kein separates Gehäuse oder weitere Verbindungs- oder Befestigungsbauteile notwendig. Gegenüber der Lösung gemäß der DE 195 21 821 C1 sind die Toleranzen des Fahrpedals gegenüber dem Lagerbock unerheblich. Ingesamt ergibt sich dadurch eine sehr einfacher, kompakter und kostengünstiger Aufbau der Kick-Down-Einrichtung.

Darüber hinaus ist in einer Mantelwandung des Betätigungsglieds wenigstens ein Durchgangsloch mit einem Querschnitt vorhanden, welcher im wesentlichen dem Querschnitt des wenigstens einen Wälzkörpers entspricht, wobei die Mantelwandung des Betätigungsglieds einen derartige Wandstärke aufweist, dass der Wälzkörper in dem in der Querausnehmung aufgenommenen Zustand durch das Durchgangsloch hindurchragen und die Keilfläche des Keilkörpers kontaktieren kann.

Durch die in den Unteransprüchen aufgeführten Maßnahmen sind vorteilhafte Weiter-bildungen und Verbesserungen der im Patentanspruch 1 b.z.w. im Patentanspruch 2 angegebenen Erfindung möglich.

In bevorzugter Weise ist die Keilfläche an einem sich von einem Kopfteil keilförmig erweiternden Fußteil des Keilglieds ausgebildet. Weiterhin weist das Betätigungsglied beispielsweise einen becherförmigen Querschnitt auf und der Kopfteil des Keilglieds ist in einem von einer Betätigungsfläche des Betätigungsglieds weg weisenden Sackloch des Betätigungsglieds axial geführt. Weiterhin stützt sich die Feder einerseits an einem Boden der Ausnehmung des Fahrpedals oder des Lagerbocks und andererseits in einer Ausnehmung im Fußteil des Keilglieds ab. Dadurch baut die Kick-Down-Einrichtung äußerst kompakt.

Bei Betätigung der Kick-Down-Einrichtung wird das Keilglied über eine maximale Eindrücktiefe des Betätigungsglieds in die Ausnehmung des Fahrpedals oder des Lagerbocks hinaus von dem an der Keilfläche anliegenden und aus der Querbohrung durch die Wirkkante nach radial innen gedrängten Wälzkörper gegen die Wirkung der

Feder weiter in die Ausnehmung des Fahrpedals oder des Lagerbocks hinein gedrückt.

Der wenigstens eine Wälzkörper wird bevorzugt durch einen Rollenkörper oder eine Kugel gebildet und ist in die Querbohrung mit einer Eindringtiefe drängbar, welche kleiner der halbe Durchmesser des Wälzkörpers ist. Dadurch wird sichergestellt, dass er von der Wirkkante des Betätigungsglieds aus dem Querausnehmung herausgedrückt werden kann, ohne dass es zu einem Verklemmen oder Verkanten kommt.

Besonders bevorzugt steht der wenigstens eine Wälzkörper durch die Vorspannung der Feder mit der Keilfläche ständig in Kontakt. Wegen des Fehlens von Eingriffsgeräuschen ergibt sich dann eine sehr geräuscharme Funktion der Kick-Down-Einrichtung.

Weitere vorteilhafte Ausgestaltungen und Weiterbildungen der Erfindung sind in den restlichen Unteransprüchen beschrieben.

### Zeichnungen

Ausführungsbeispiele der Erfindung ist in der Zeichnung dargestellt und in der nachfolgenden Beschreibung näher erläutert. In der Zeichnung zeigt
- Fig.1: eine Querschnittsdarstellung einer Kick-Down-Einrichtung gemäß einer bevorzugten Ausführungsform der Erfindung in nicht betätigter Ausgangstellung;
- Fig.2: eine Querschnittsdarstellung der Kick-Down-Einrichtung von Fig.1 in betätigter Endstellung;
- Fig.3: eine Querschnittsdarstellung einer weiteren Ausführungsform der Kick-Down-Einrichtung gemäß der Erfindung.

### Beschreibung der Ausführungsbeispiele

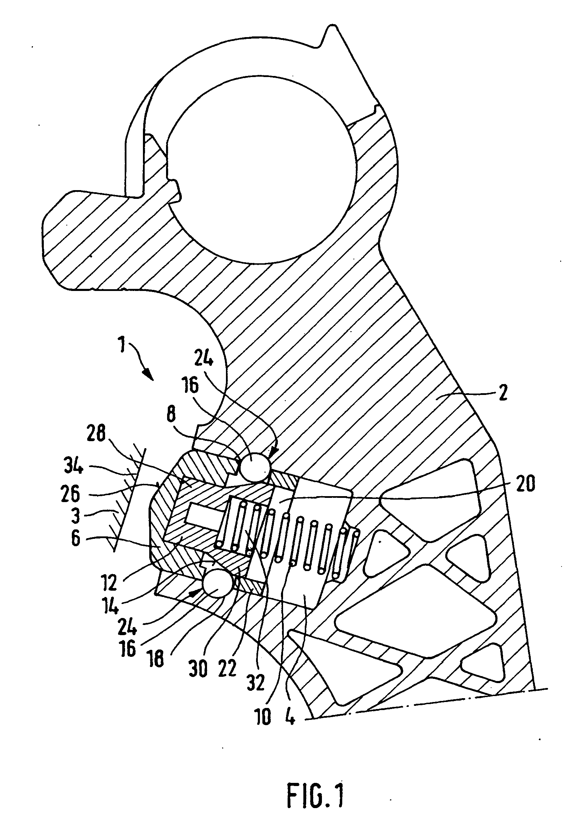

Die in Fig.1 insgesamt mit 1 bezeichnete bevorzugte Ausführungsform einer Kick-Down-Einrichtung gemäß der Erfindung ist in einem aus Maßstabsgründen nicht gezeigten Fahrpedalmodul eines Kraftfahrzeugs integriert, welches als Baueinheit vormontiert ist. Das Fahrpedalmodul beinhaltet ein an einem Lagerbock 3 schwenkbar gelagertes, zwischen einer Ruhestellung und einer Endstellung verstellbares Fahrpedal 2.

Die Kick-Down-Einrichtung 1 umfasst gemäß der bevorzugten Ausführungsform
a) wenigstens ein in einer Ausnehmung 4 des Fahrpedals 2 axial geführtes Betätigungsglied 6 mit einer Wirkkante 8 sowie
b) ein in der Ausnehmung 4 axial geführtes, mit dem Betätigungsglied 6 über vorzugsweise zwei Wälzkörper 16 zusammenwirkendes und durch wenigstens eine Druckfeder 10 belastetes Keilglied 12 mit einer Keilfläche 14, wobei
c) bei Betätigung des Fahrpedals 2 bis zu einem definierten Punkt das Betätigungsglied 6 durch die Betätigungskraft in die Ausnehmung 4 axial hinein und durch dessen Wirkkante 8 die zwei Wälzkörper 16 aus Querausnehmungen 18 der Ausnehmung 4 radial heraus und gegen die Keilfläche 14 des Keilglieds 12 drängbar sind.

Die Wälzkörper 16 liegen in der Ausnehmung 4 einander diametral gegenüber und werden vorzugsweise durch zylindrische Rollen gebildet. Entsprechend ist der Querschnitt der Querausnehmungen 18 zylindrisch mit komplementärem Querschnitt ausgebildet, wobei die Mittelachse der Querausnehmungen 18 außerhalb der Wandung der Ausnehmung 4 liegt, so dass die maximale Eindringtiefe der Rollen 16 in die Querausnehmungen 18 geringer als der halbe Rollendurchmesser ist.

Das Betätigungsglied 6 hat einen becherförmigen Querschnitt, wobei in einer eine Sacklochbohrung 20 umgebenden Mantelwandung 22 zwei radiale Durchgangslöcher 24 mit einem Querschnitt vorhanden sind, welcher im wesentlichen dem Längsquerschnitt der Rollen 16 entspricht. Die Wirkkante 8 ist dann an der zu einer Betätigungsfläche 26 des Betätigungsglieds 6 weisenden Längsstirnfläche der Durchgangslöcher 24 ausgebildet.

In der in Fig.1 gezeigten Ausgangslage überdecken sich die Durchgangslöcher 24 mit den in den Querausnehmungen 18 gehaltenen Rollen 16. Dabei hat die Mantelwandung 22 des Betätigungsglieds 6 eine derartige Wandstärke, dass die Rollen 16 durch die Durchgangslöcher 24 hindurchragen und die Keilfläche 14 des Keilglieds 12 kontaktieren können. Das Keilglied 12 ist mit einem Kopfteil 28 in der Sacklochbohrung 20 des Betätigungsglieds 6 axial geführt. In bevorzugter Weise ist die Keilfläche 14 an einem sich vom Kopfteil 28 keilförmig erweiternden Fußteil 30 des Keilglieds 12 ausgebildet. Im nicht betätigten, in Fig.1 gezeigten Ausgangszustand ist ein kleiner Luftspalt zwischen dem Boden des Betätigungsglieds 6 und dem Kopfteil 28 des Keilglieds 12 vorhanden. Die Druckfeder 10 stützt sich einerseits am Boden der Ausnehmung 4 des Fahrpedals 2 und andererseits in einer vom Kopfteil 28 weg weisenden gestuften Sacklochbohrung 32 des Keilglieds 12 ab und steht vorzugsweise ständig unter Vorspannung. Sie sorgt in Verbindung mit der Keilfläche 14 dafür, dass die Rollen 16 aufgrund der radialen Komponente der Druckfederkraft in den Querausnehmungen 18 gehalten werden.

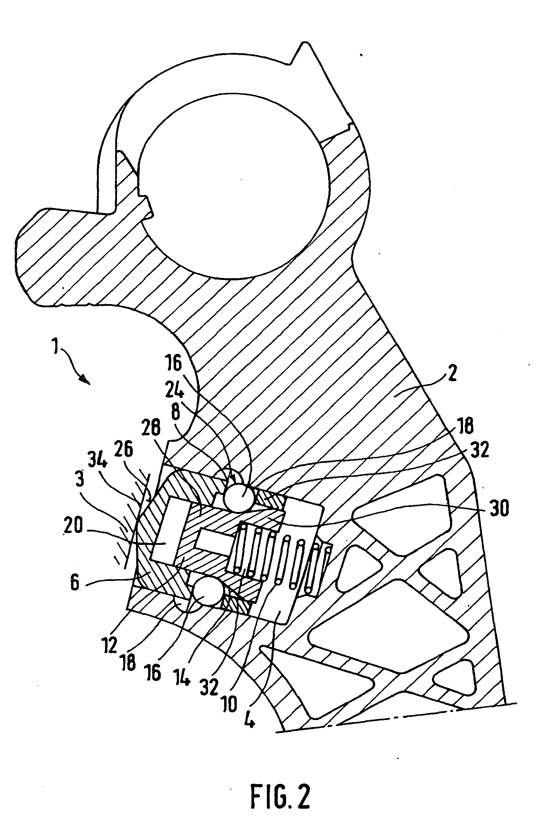

Wenn das Betätigungsglied 6 durch entsprechendes Niederdrücken des Fahrpedals 2 betätigt wird, kommt es in Kontakt mit einem Anschlag 34 am Lagerbock 3 des Fahrpedalmoduls und wird in die Ausnehmung 4 des Fahrpedals 2 gedrückt. Dabei nimmt das Betätigungsglied 6 die durch die Durchgangslöcher 24 ragenden Rollen 16 mit, indem es diese, die nicht mit ihrem gesamten halben Durchmesser in den Querausnehmungen 18 ruhen, mit seiner Wirkkante 8 aus den Querausnehmungen 18 heraus nach radial innen drückt, wie anhand von Fig.2 leicht vorstellbar ist. Dabei verschieben die ständig an der Keilfläche 14 anliegenden Rollen 16 das Keilglied 12 relativ zum Betätigungsglied 6 weiter in die Ausnehmung 4 des Fahrpedals 2 hinein, wobei die Rollen 16 nach wie vor in den Durchgangslöchern 24 der Mantelwandung 22 des Betätigungsglieds 6 geführt sind und die Druckfeder 10 weiter gespannt wird.

Die geforderte Kraftspitze, die der Fahrer bei Betätigung der Kick-Down-Einrichtung 1 am Fahrpedal 2 fühlen soll, wird dabei durch die Kraft gebildet, welche für das Herausdrücken der Rollen 16 aus den Querausnehmungen 18 notwendig ist. Die Größe dieser Kraftspitze kann durch die Eindringtiefe der Rollen 16 in den Querausnehmungen 18 bzw. durch die Geometrie der Rollen 16 und Querausnehmungen 18 und/oder durch die Federrate der Druckfeder 10 bestimmt werden. Nach dem schlagartigen Herausdrücken der Rollen 16 fällt die Betätigungskraft rasch ab, da die durch die Kick-Down-Einrichtung 1 erzeugte, der Betätigungskraft entgegen wirkende Gegenkraft neben den Reibungskräften im wesentlichen nur noch von der gespannten Druckfeder 10 bestimmt wird. Durch diese Funktionsweise wird der gewünschte steile Kraftanstieg und der danach folgende Kraftabfall realisiert, den der Fahrer am Fahrpedal fühlen soll.

Zur Rückstellung der Kick-Down-Einrichtung 1 von der in Fig.2 gezeigten Endlage in die Ausgangslage von Fig.1, also wenn das Betätigungsglied 6 mit dem Anschlag 34 wieder außer Eingriff steht, leitet die Keilfläche 14 die Federkraft der Druckfeder 10 radial um, wodurch die Rollen 16 in die Querausnehmungen 18 zurückgedrängt werden, was auch zur Folge hat, dass die zugleich in den Durchgangslöchern 24 gehaltenen Rollen 16 das Betätigungsglied 6 in die Ausgangslage mitnehmen.

Zur Montage wird die vormontierte Kick-Down-Einrichtung 1, bestehend aus Druckfeder 10, Rollen 16, Keilglied 12 und Betätigungsglied 6 in der in Fig.2 dargestellten Lage mit radial innen liegenden Rollen 16 in die Ausnehmung 4 eingesetzt, bis die Rollen 16 bedingt durch die über die Keilfläche 14 eingeleitete Druckkraft der Druckfeder 10 in die Querausnehmungen 18 einrasten.

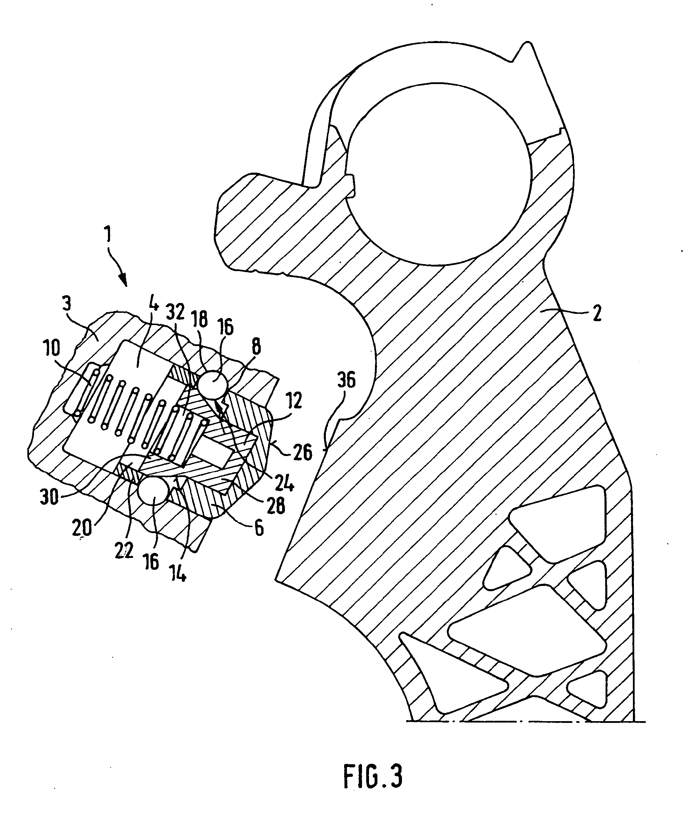

Bei dem zweiten Ausführungsbeispiel der Erfindung nach Fig.3 sind die gegenüber dem vorhergehenden Beispiel gleich bleibenden und gleich wirkenden Teile durch die gleichen Bezugszeichen gekennzeichnet. Im Unterschied zu diesem ist die die Kick-Down-Einrichtung 1 aufnehmende Ausnehmung 4 nicht im Fahrpedal 2 sondern im Lagerbock 3 ausgebildet. Im weiteren weist das Fahrpedal 2 eine der Betätigungsfläche 26 des Betätigungsglieds 6 gegenüberliegende Kontaktfläche 36 auf, die, wenn das Fahrpedal 2 um einen bestimmten Betätigungswinkel betätigt wurde, die Betätigungsfläche 26 kontaktieren und dadurch eine Betätigung der Kick-Down-Einrichtung 1 hervorrufen kann. Ansonsten sind Funktion und Aufbau der Kick-Down-Einrichtung 1 wie beim vorangehenden Ausführungsbeispiel beschrieben.

## Patentansprüche

1. Kick-Down-Einrichtung (1) mit einem Fahrpedal (2), für ein Fahrpedalmodul mit einem Lagerbock (3), wobei das Fahrpedal (2) an dem Lagerbock (3) gelagert und zwischen einer Ruhestellung und einer Endstellung verstellbar ist, wobei
a) die Kick-Down-Einrichtung (1) wenigstens ein in einer Ausnehmung (4) des Fahrpedals (2) axial geführtes Betätigungsglied (6) mit wenigstens einer Wirkkante (8) umfasst, wobei in einer Mantelwandung (22) des Betätigungsglieds (6) wenigstens ein radiales Durchgangsloch (24) mit einem Querschnitt vorhanden ist, welcher im wesentlichen dem Querschnitt des wenigstens einen Wälzkörpers (16) entspricht, **dadurch gekennzeichnet, daß** die Kick-Down-Einrichtung (1)
b) ein in der Ausnehmung (4) axial geführtes, mit dem Betätigungsglied (6) über wenigstens einen Wälzkörper (16) zusammenwirkendes und durch wenigstens eine Druckfeder (10) belastetes Keilglied (12) mit einer Keilfläche (14) umfasst, wobei
c) bei Betätigung des Fahrpedals (2) bis zu einem definierten Punkt das Betätigungsglied (6) in die Ausnehmung (4) axial hinein und durch dessen Wirkkante (8) der wenigstens eine Wälzkörper (16) aus einer Querausnehmung (18) der Ausnehmung (4) radial heraus und gegen die Keilfläche (14) des Keilglieds (12) drängbar ist, wobei die Mantelwandung (22) des Betätigungsglieds (6) eine derartige Wandstärke aufweist, dass der Wälzkörper (16) in dem in der Querausnehmung (18) aufgenommenen Zustand durch das radiale Durchgangsloch (24) hindurchragen und die Keilfläche (14) des Keilglieds (12) kontaktieren kann.

2. Kick-Down-Einrichtung (1) mit einem Lagerbock (3), für ein Fahrpedalmodul mit einem an dem Lagerbock (3) gelagerten und zwischen einer Ruhestellung und einer Endstellung verstellbaren Fahrpedal (2), wobei
a) die Kick-Down-Einrichtung (1) wenigstens ein in einer Ausnehmung (4) des Lagerbocks (3) axial geführtes Betätigungsglied (6) mit wenigstens einer Wirkkante (8) umfasst, wobei in einer Mantelwandung (22) des Betätigungsglieds (6) wenigstens ein radiales Durchgangsloch (24) mit einem Querschnitt vorhanden ist, welcher im wesentlichen dem Querschnitt des wenigstens einen Wälzkörpers (16) entspricht, **dadurch gekennzeichnet, daß** die Kick-Down-Einrichtung (1)
b) ein in der Ausnehmung (4) axial geführtes, mit dem Betätigungsglied (6) über wenigstens einen Wälzkörper (16) zusammenwirkendes und durch wenigstens eine Druckfeder (10) belastetes Keilglied (12) mit einer Keilfläche (14) umfasst, wobei
c) bei Betätigung des Fahrpedals (2) bis zu einem definierten Punkt das Betätigungsglied (6) in die Ausnehmung (4) axial hinein und durch dessen Wirkkante (8) der wenigstens eine Wälzkörper (16) aus einer Querausnehmung (18) der Ausnehmung (4) radial heraus und gegen die Keilfläche (14) des Keilglieds (12) drängbar ist, wobei die Mantelwandung (22) des Betätigungsglieds (6) eine derartige Wandstärke aufweist, dass der Wälzkörper (16) in dem in der Querausnehmung (18) aufgenommenen Zustand durch das Durchgangsloch (24) hindurchragen und die Keilfläche (14) des Keilglieds (12) kontaktieren kann.

3. Kick-Down-Einrichtung nach Anspruch 1 oder 2, **dadurch gekennzeichnet, dass** die Keilfläche (14) an einem sich von einem Kopfteil (28) keilförmig erweiternden Fußteil (30) des Keilglieds (12) ausgebildet ist.

4. Kick-Down-Einrichtung nach Anspruch 3, **dadurch gekennzeichnet, dass** das Betätigungsglied (6) einen becherförmigen Querschnitt aufweist und der Kopfteil (28) des Keilglieds (12) in einem von einer Betätigungsfläche (26) des Betätigungsglieds (6) weg weisenden Sackloch (20) des Betätigungsglieds (6) axial geführt ist.

5. Kick-Down-Einrichtung nach einem der vorhergehenden Ansprüche, **dadurch gekennzeichnet, dass** die Wirkkante (8) an der zur Betätigungsfläche (26) weisenden Stirnfläche des Durchgangslochs (24) des Betätigungsglieds (6) ausgebildet ist.

6. Kick-Down-Einrichtung nach wenigstens einem der Ansprüche 1 bis 5, **dadurch gekennzeichnet, dass** bei Betätigung der Kick-Down-Einrichtung (1) das Keilglied (12) über eine maximale Eindrücktiefe des Betätigungsglieds (6) hinaus von dem an der Keilfläche (14) anliegenden und aus der Querausnehmung (18) durch die Wirkkante (8) nach radial innen gedrängten Wälzkörper (16) gegen die Wirkung der Druckfeder (10) weiter in die Ausnehmung (4) des Fahrpedals (2) oder des Lagerbocks (3) hinein gedrückt wird.

7. Kick-Down-Einrichtung nach wenigstens einem der Ansprüche 1 bis 6, **dadurch gekennzeichnet, dass** sich die Druckfeder (10) einerseits an einem Boden der Ausnehmung (4) des Fahrpedals (2) oder des Lagerbocks (3) und andererseits in einem Sackloch (32) des Keilglieds (12) abstützt.

8. Kick-Down-Einrichtung nach wenigstens einem der vorhergehenden Ansprüche, **dadurch gekennzeichnet, dass** der Wälzkörper (16) durch einen Rollenkörper oder eine Kugel gebildet wird und in die Querausnehmung (18) mit einer Eindringtiefe drängbar ist, welche kleiner der halbe Durchmesser des Wälzkörpers (16) ist.

9. Kick-Down-Einrichtung nach wenigstens einem der vorhergehenden Ansprüche, **dadurch gekennzeichnet, dass** das Betätigungsglied (6) von einem zugeordneten Anschlag (34) betätigbar ist.

10. Kick-Down-Einrichtung nach wenigstens einem der vorhergehenden Ansprüche, **dadurch gekennzeichnet, dass** bedingt durch die Vorspannung der Druckfeder (10) der wenigstens eine Wälzkörper (16) mit der Keilfläche (14) ständig in Kontakt steht.

## Claims

1. Kick-down device (1) having an accelerator pedal (2), for an accelerator-pedal module having a bearing block (3), the accelerator pedal (2) being mounted on the bearing block (3) and it being possible for the said accelerator pedal (2) to be adjusted between a rest position and an end position,
a) the kick-down device (1) comprising at least one actuating member (6) which is guided axially in a recess (4) of the accelerator pedal (2) and has at least one action edge (8), there being, in a shell wall (22) of the actuating member (6), at least one radial through hole (24) with a cross section which corresponds substantially to the cross section of the at least one rolling body (16),
**characterized in that** the kick-down device (1) comprises
b) a wedge member (12) which is guided axially in the recess (4), interacts with the actuating member (6) via at least one rolling body (16), is loaded by at least one compression spring (10) and has a wedge face (14),
c) upon actuation of the accelerator pedal (2) as far as a defined point, it being possible for the actuating member (6) to be displaced axially into the recess (4) and it being possible for the at least one rolling body (16) to be displaced by way of the action edge (8) of the said actuating member (6) radially out of a transverse recess (18) of the recess (4) and against the wedge face (14) of the wedge member (12), the shell wall (22) of the actuating member (6) having a wall thickness which is such that, in the state in which it is received in the transverse recess (18), the rolling body (16) can protrude through the radial through hole (24) and can make contact with the wedge face (14) of the wedge member (12).

2. Kick-down device (1) having a bearing block (3), for an accelerator-pedal module having an accelerator pedal (2) which is mounted on the bearing block (3) and can be adjusted between a rest position and an end position,
a) the kick-down device (1) comprising at least one actuating member (6) which is guided axially in a recess (4) of the bearing block (3) and has at least one action edge (8), there being, in a shell wall (22) of the actuating member (6), at least one radial through hole (24) with a cross section which corresponds substantially to the cross section of the at least one rolling body (16),
**characterized in that** the kick-down device (1) comprises
b) a wedge member (12) which is guided axially in the recess (4), interacts with the actuating member (6) via at least one rolling body (16), is loaded by at least one compression spring (10) and has a wedge face (14),
c) upon actuation of the accelerator pedal (2) as far as a defined point, it being possible for the actuating member (6) to be displaced axially into the recess (4) and it being possible for the at least one rolling body (16) to be displaced by way of the action edge (8) of the said actuating member (6) radially out of a transverse recess (18) of the recess (4) and against the wedge face (14) of the wedge member (12), the shell wall (22) of the actuating member (6) having a wall thickness which is such that, in the state in which it is received in the transverse recess (18), the rolling body (16) can protrude through the through hole (24) and can make contact with the wedge face (14) of the wedge member (12).

3. Kick-down device according to Claim 1 or 2, **characterized in that** the wedge face (14) is formed on a foot part (30) of the wedge member (12), which foot part (30) widens in a wedge-shaped manner from a head part (28).

4. Kick-down device according to Claim 3, **characterized in that** the actuating member (6) has a cup-shaped cross section and the head part (28) of the wedge member (12) is guided axially in a blind hole (20) of the actuating member (6), which blind hole (20) points away from an actuating face (26) of the actuating member (6).

5. Kick-down device according to one of the preceding claims, **characterized in that** the action edge (8) is formed on that end face of the through hole (24) of the actuating member (6) which points towards the actuating face (26).

6. Kick-down device according to at least one of Claims 1 to 5, **characterized in that**, upon actuation of the kick-down device (1), the wedge member (12) is pressed further beyond a maximum press-in depth of the actuating member (6) into the recess (4) of the accelerator pedal (2) or of the bearing block (3) by the rolling body (16) which bears against the wedge face (14) and is displaced out of the transverse recess (18) radially to the inside by the action edge (8), counter to the action of the compression spring (10).

7. Kick-down device according to at least one of Claims 1 to 6, **characterized in that** the compression spring (10) is supported firstly on a bottom of the recess (4) of the accelerator pedal (2) or of the bearing block (3) and secondly in a blind hole (32) of the wedge member (12).

8. Kick-down device according to at least one of the preceding claims, **characterized in that** the rolling body (16) is formed by a roller body or a ball and can be displaced into the transverse recess (18) with a penetration depth which is smaller than half the diameter of the rolling body (16).

9. Kick-down device according to at least one of the preceding claims, **characterized in that** the actuating member (6) can be actuated by an associated stop (34).

10. Kick-down device according to at least one of the preceding claims, **characterized in that** the at least one rolling body (16) is permanently in contact with the wedge face (14) as a result of the prestress of the compression spring (10).

## Revendications

1. Dispositif de rétrogradage forcé (1) équipé d'une pédale d'accélérateur (2), pour un module de pédale d'accélérateur doté d'un support de palier (3), la pédale d'accélérateur (2) étant disposée au niveau du support de palier (3) et pouvant être déplacée entre une position de repos et une position d'extrémité ;
a) le dispositif de rétrogradage forcé (1) comportant au moins un élément d'actionnement (6) guidé dans le plan axial dans un évidement (4) de la pédale d'accélérateur (2) avec au moins un bord actif (8) ;
au mois un trou traversant (24) radial étant placé dans une paroi d'enveloppe (22) de l'élément d'actionnement (6), la section transversale dudit trou correspondant pour l'essentiel à la section transversale de l'au moins un corps de roulement (16) ;
**caractérisé en ce que** le dispositif de rétrogradage forcé (1) comprend :
b) un élément sphénoïdal (12) guidé dans le plan axial dans l'évidement (4), interagissant avec l'élément d'actionnement (6) via au moins un corps de roulement (16) et sollicité par au moins un ressort de pression (10) et entouré d'une surface sphénoïdale (14) ;
c) lors de l'actionnement de la pédale d'accélérateur (2) jusqu'à un point défini, l'élément d'actionnement (6) peut être comprimé dans l'évidement (4) dans le plan axial et hors d'un évidement transversal (18) de l'évidement (4) dans le plan radial par le biais du bord actif (8) de l'au moins un corps de roulement (16) et contre la surface sphénoïdale (14) de l'élément sphénoïdal (12), la paroi d'enveloppe (22) de l'élément d'actionnement (6) comportant une épaisseur de paroi telle que le corps de roulement (16) peut passer à travers le trou traversant (24) radial dans l'état reçu dans l'évidement transversal (18) et peut entrer en contact avec la surface sphénoïdale (14) de l'élément sphénoïdal (12).

2. Dispositif de rétrogradage forcé (1) équipé d'un support de palier (3), pour un module de pédale d'accélérateur doté d'une pédale d'accélérateur (2) disposée au niveau du support de palier (3) et mobile entre une position de repos et une position d'extrémité ;
a) le dispositif de rétrogradage forcé (1) comportant au moins un élément d'actionnement (6) guidé dans le plan axial dans un évidement (4) du support de palier (3) avec au moins un bord actif (8) ;
**caractérisé en ce que** le dispositif de rétrogradage forcé (1) comprend :
b) un élément sphénoïdal (12) guidé dans le plan axial dans l'évidement (4), interagissant avec l'élément d'actionnement (6) via au moins un corps de roulement (16) et sollicité par au moins un ressort de pression (10) et entouré d'une surface sphénoïdale (14) ;
c) lors de l'actionnement de la pédale d'accélérateur (2) jusqu'à un point défini, l'élément d'actionnement (6) peut être comprimé dans l'évidement (4) dans le plan axial et hors d'un évidement transversal (18) de l'évidement (4) dans le plan radial par le biais du bord actif (8) de l'au moins un corps de roulement (16) et contre la surface sphénoïdale (14) de l'élément sphénoïdal (12), la paroi d'enveloppe (22) de l'élément d'actionnement (6) comportant une épaisseur de paroi telle que le corps de roulement (16) peut passer à travers le trou traversant (24) dans l'état reçu dans l'évidement transversal (18) et peut entrer en contact avec la surface sphénoïdale (14) de l'élément sphénoïdal (12).

3. Dispositif de rétrogradage forcé selon la revendication 1 ou 2, **caractérisé en ce que** la surface sphénoïdale (14) est réalisée au niveau d'une partie de pied (30) de l'élément sphénoïdal (12) s'élargissant en forme de clavette à partir d'une partie de tête (28).

4. Dispositif de rétrogradage forcé selon la revendication 3, **caractérisé en ce que** l'élément d'actionnement (6) présente une section transversale en forme de bécher et que la partie de tête (28) de l'élément sphénoïdal (12) est guidée dans le plan axial dans un trou borgne (20) de l'élément d'actionnement (6) s'écartant d'une surface d'actionnement (26) de l'élément d'actionnement (6).

5. Dispositif de rétrogradage forcé selon l'une quelconque des revendications précédentes, **caractérisé en ce que** le bord actif (8) est réalisé au niveau de la surface avant du trou traversant (24) de l'élément d'actionnement (6) orientée vers la surface d'actionnement (26).

6. Dispositif de rétrogradage forcé selon au moins l'une quelconque des revendications 1 à 5, **caractérisé en ce que** lors de l'actionnement du dispositif de rétrogradage forcé (1), l'élément sphénoïdal (12) est comprimé plus encore au-delà d'une profondeur d'insertion maximale de l'élément d'actionnement (6) dans l'évidement (4) de la pédale d'accélérateur (2) ou du support de palier (3) pour le corps de roulement (16) qui s'applique contre la surface sphénoïdale (14) et qui est déplacé hors de l'évidement transversal (18) radialement vers l'intérieur par le bord actif (8), à l'encontre de l'action du ressort de pression (10).

7. Dispositif de rétrogradage forcé selon au moins l'une quelconque des revendications 1 à 6, **caractérisé en ce que** le ressort de pression (10) appuie d'une part contre le fond de l'évidement (4) de la pédale d'accélérateur (2) ou du support de palier (3) et d'autre part dans un trou borgne (32) de l'élément sphénoïdal (12).

8. Dispositif de rétrogradage forcé selon au moins l'une quelconque des revendications précédentes, **caractérisé en ce que** le corps de roulement (16) est formé par un corps de rouleau ou une sphère et peut être comprimé dans l'évidement transversal (18) avec une profondeur d'insertion inférieure à la moitié du diamètre du corps de roulement (16).

9. Dispositif de rétrogradage forcé selon au moins l'une quelconque des revendications précédentes, **caractérisé en ce que** l'élément d'actionnement (6) peut être actionné par une butée (34) associée.

10. Dispositif de rétrogradage forcé selon au moins l'une quelconque des revendications précédentes, **caractérisé en ce que** l'au moins un corps de roulement (16) est en permanence en contact avec la surface sphénoïdale (14) en raison de la précontrainte du ressort de pression (10).
